(19) Europäisches Patentamt
European Patent Office
Office européen des brevets

(11) **EP 4 160 144 B1**

(12) **EUROPEAN PATENT SPECIFICATION**

(45) Date of publication and mention
of the grant of the patent:
**07.08.2024 Bulletin 2024/32**

(21) Application number: **22197653.3**

(22) Date of filing: **26.09.2022**

(51) International Patent Classification (IPC):
**G01C 15/00** (2006.01)    **G01B 1/00** (2006.01)

(52) Cooperative Patent Classification (CPC):
**G01C 15/002; G01B 11/306; G06T 7/0004;
G06T 7/60; H04N 7/183;** G06T 2207/10028;
G06T 2207/30132

(54) **SURVEYING SYSTEM**

VERMESSUNGSSYSTEM

SYSTÈME D'ARPENTAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2021 JP 2021160383**

(43) Date of publication of application:
**05.04.2023 Bulletin 2023/14**

(73) Proprietor: **TOPCON CORPORATION
Tokyo 174-8580 (JP)**

(72) Inventors:
• **NISHITA, Nobuyuki
Tokyo (JP)**
• **KANEKO, Junki
Tokyo-to (JP)**

(74) Representative: **Louis Pöhlau Lohrentz
Patentanwälte
Merianstrasse 26
90409 Nürnberg (DE)**

(56) References cited:
**JP-A- 2003 082 990    US-A1- 2020 271 758
US-A1- 2021 214 922**

**Description**

BACKGROUND OF THE DISCLOSURE

The present disclosure relates to a surveying system which determines an unevenness state of an object surface.

In a concrete placing work or a ground leveling work, it is required to eliminate an unevenness state (an irregularity state) of a placed surface or a leveled surface and to construct the placed surface or the leveled surface to a set height.

Conventionally, for instance, in the concrete placing work, a measuring rod is inserted into a concrete at a placed part, and a height of the concrete of the placed part is actually measured at predetermined intervals.

After actually measuring the thickness (the height), if an unevenness state occurs, correction work is performed that the concrete is added to concave portions, or the concrete is removed from convex portions, and so forth.

In conventional methods, individual height measurements are done manually, which makes the workability of the unevenness measurement poor. Further, the concrete placing work, the height measuring work, and the correcting work are separate processes, which results in a poor work efficiency.

Further, in the ground leveling work, a leveling height (the unevenness state) is measured, for instance, by stretching a string at a predetermined height after the ground leveling, and if any deviation or unevenness with respect to the set height is occurred, correction of filling or removing the soil is performed.

US 2021/214922 A1 discloses a display system for a work vehicle.

A camera captures an image of a surrounding environment of a work vehicle and a shape sensor measures a three-dimensional shape of the surrounding environment and outputs 3D shape data indicative of the three-dimensional shape. A controller generates display image data that represents a display image of the surrounding environment of the work vehicle.

SUMMARY OF DISCLOSURE

It is an object of the present disclosure to provide a surveying system which can easily measure a deviation of an object surface with respect to a set height or an unevenness state and enables the construction work, such as placing work of concrete or leveling work of ground in parallel with a measurement of a height of the set object surface or a measurement of the unevenness state.

To attain the object as described above, a surveying system according to claim 1 is provided.

Further, in the surveying system according to a preferred embodiment, the height measuring device is adapted to form a horizontal reference plane with a known height, the object is a photodetector for detecting the horizontal reference plane, and the arithmetic control module is configured to calculate a height of a measurement reference position of the distance measurement sensor with respect to the horizontal reference plane based on a detection result of the photodetector and to calculate the high-low information of the construction surface based on a measurement result of the distance measurement sensor.

Further, in the surveying system according to a preferred embodiment, the height measuring device is a surveying instrument which is provided at a known height, has a TS communication module configured to transmit measurement results and has a tracking function, the high-low measuring device has a terminal communication module configured to receive measurement results from the TS communication module, the object is a prism, and the arithmetic control module is configured to acquire the height information of the prism via the terminal communication module, to calculate a height of the measurement reference position of the distance measurement sensor based on the height information of the prism, and to calculate the high-low information of the construction surface based on a measurement result of the distance measurement sensor.

Further, in the surveying system according to a preferred embodiment, the high-low measuring device further comprises a tilt sensor, and the arithmetic control module is configured to correct the high-low information based on a detection result of the tilt sensor.

Further, in the surveying system according to a preferred embodiment, the high-low measuring device further comprises a tilt sensor and is constituted as a handheld type, and the arithmetic control module is configured to correct the high-low information based on a detection result of the tilt sensor.

Further, in the surveying system according to a preferred embodiment, the distance measurement sensor is a distance measurement camera.

Further, in the surveying system according to a preferred embodiment, the distance measurement sensor is a parallax camera.

Further, in the surveying system according to a preferred embodiment, the distance measurement sensor is constituted of a projector for projecting a pattern for measuring distance and a camera provided to produce a parallax with respect to the projector.

Furthermore, in the surveying system according to a preferred embodiment, the distance measurement sensor is a laser length measuring device, and the distance measurement sensor irradiates laser beams of a plurality of different colors, and the arithmetic control module is configured to select a color of a laser beam in correspondence with the high-low information.

According to the present disclosure, the surveying system comprises a height measuring device and a high-low measuring device, wherein the high-low measuring device comprises an object measured by the height measuring device, a distance measurement sensor which is provided in a known relationship with the object and measures a distance to a construction surface, a projecting device for projecting a high-low information, and an arithmetic control module, wherein the arithmetic control module is configured to calculate a high-low information of the construction surface based on a height information of the object measured by the height measuring device and a distance information measured by the distance measurement sensor, and wherein the projecting device is configured to project the high-low information onto the construction surface. As a result, an unevenness state of the object surface can be easily visually confirmed since the measurement information and the high-low information of that site are directly projected, which enables the construction work, such as the placement work or the ground leveling work in parallel with the measurement of the unevenness state.

BRIEF DESCRIPTION OF DRAWINGS

FIG.1 is a schematic drawing of a surveying system according to a first embodiment.
FIG.2 is a schematic block diagram of a laser level planer.
FIG.3 is a schematic block diagram of a high-low measuring device.
FIG.4 is an explanatory drawing regarding the measurement of an unevenness state.
FIG.5 is a flowchart showing the unevenness measuring work.
FIG.6 is a schematic drawing showing a modification of the first embodiment.
FIG.7 is a schematic view of a surveying system according to a second embodiment.
FIG.8A is a drawing showing an example of a pattern when performing a distance measurement using a parallax, and FIG.8B is a drawing of a projected image with an unevenness image superimposed on the pattern.
FIG.9 is a schematic drawing of a surveying system according to a third embodiment.
FIG.10 is a schematic block diagram of a total station in the third embodiment.
FIG.11 is a schematic block diagram of a high-low measuring device in the third embodiment.
FIG.12 is an explanatory drawing regarding the measurement of an unevenness state in the third embodiment.
FIG.13A is a schematic drawing of a surveying system according to a fourth embodiment, and FIG.13B and FIG. 13C are explanatory drawings of the measurement of an unevenness state.

DETAILED DESCRIPTION OF THE PREFERRED EMBODIMENT

Description will be given below on embodiments of the present disclosure by referring to attached drawings.

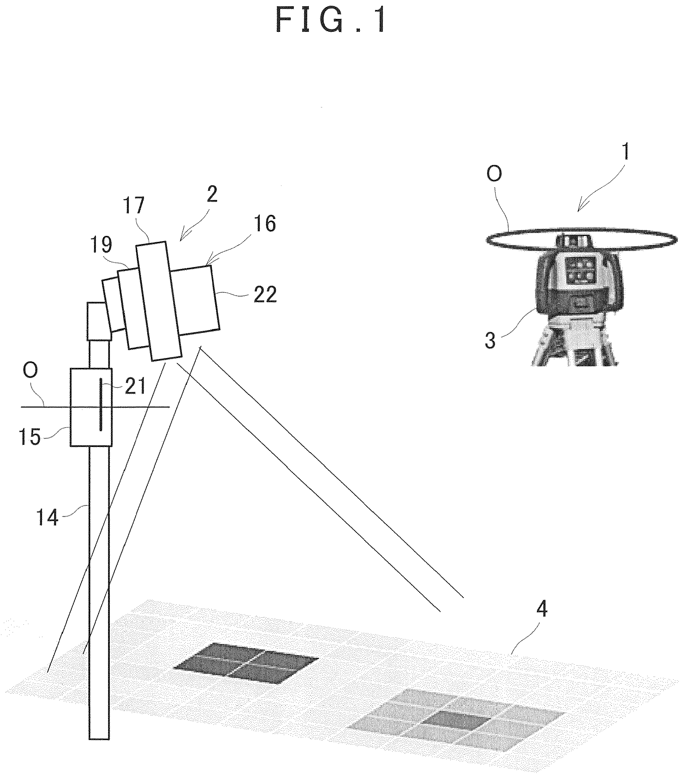

FIG.1 shows general features of a surveying system according to a first embodiment, and the surveying system is mainly constituted of a height measuring device 1 and a high-low measuring device 2. It is to be noted that, in FIG.1, a reference numeral 4 denotes an unevenness map (to be described later).

In the first embodiment, a laser level planer 3 is used as the height measuring device 1.

The laser level planer 3 forms a horizontal reference plane with a predetermined height by a laser beam. The horizontal reference plane may be formed by rotatably irradiating the laser beam on a horizontal plane or may be formed by horizontally irradiating a fan-shaped laser beam. In the following explanation, a case where a horizontal reference plane O is formed by rotatably irradiating the laser beam is described.

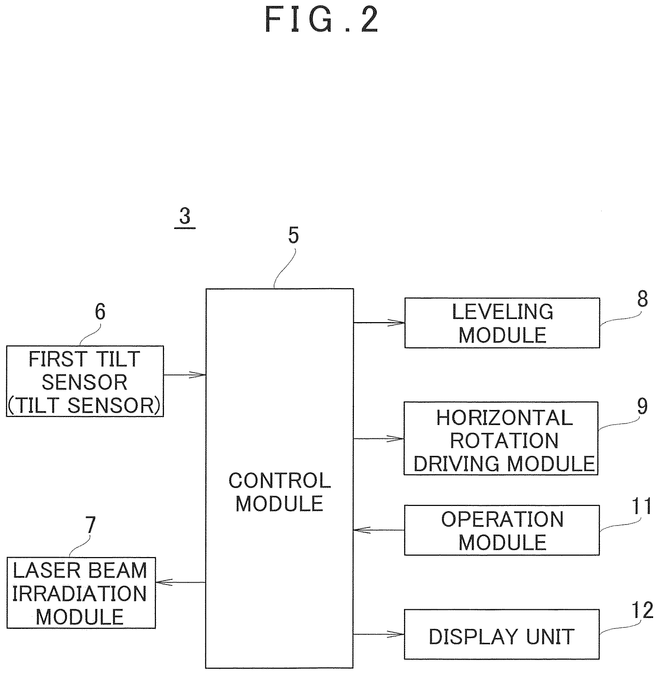

By referring to FIG.2, a description will be given on general features of the laser level planer 3.

The laser level planer 3 is installed at a necessary position via a support device such as a tripod. The laser level planer 3 mainly includes a control module 5, a first tilt sensor 6, a laser beam irradiation module 7, a leveling module 8, a horizontal rotation driving module 9, an operation module 11, and a display unit 12.

The first tilt sensor 6 detects a tilt of the laser level planer 3 with respect to the horizontality, that is, a tilt of a laser beam as irradiated with respect to the horizontality. A detection result of the first tilt sensor 6 is input to the control module 5.

The control module 5 drives the leveling module 8 based on a detection result of the first tilt sensor 6, and adjusts the laser level planer 3 to the horizontality. The control module 5 makes the laser beam irradiation module 7 to irradiate the laser beam, makes the horizontal rotation driving module 9 to rotate the laser beam irradiation module 7, and rotatably irradiates the laser beam such that the horizontal reference plane O is formed.

The laser level planer 3 is installed so that the horizontal reference plane O is at a known height. For instance, a height of the horizontal reference plane O from a floor surface serving as a reference is known by actual measurements or based on specifications of the laser level planer 3 and the like. When the known horizontal reference plane O is formed, the height of an object can be measured with reference to the horizontal reference plane O.

An instruction to turn ON/OFF operations of the laser level planer 3, settings of operation conditions, and the like are input to the control module 5 from the operation module 11, and an operation state and the like are displayed on the display unit 12.

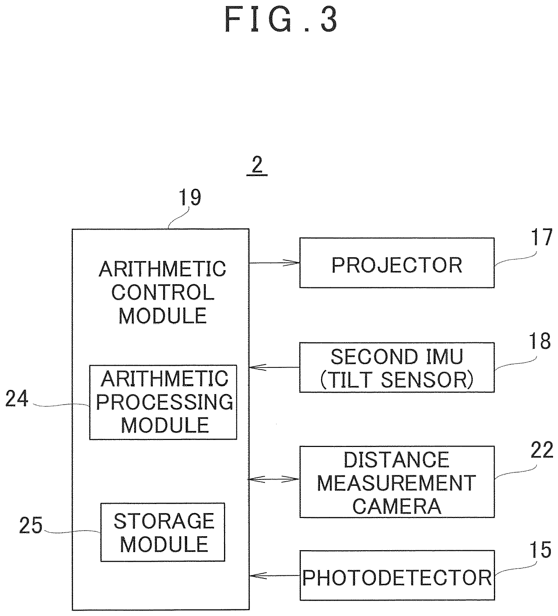

By referring to FIG.3, a description will be given on the high-low measuring device 2.

The high-low measuring device 2 includes a pole 14, a photodetector 15 as an object to be measured which is provided at a necessary height of the pole 14, a distance measurement sensor 16 provided at an upper end of the pole 14, a projector 17 as a projecting device, a second tilt sensor 18, and an arithmetic control module 19. The photodetector 15 and the distance measurement sensor 16 are provided in a known positional relationship.

The photodetector 15 has a photodetection sensor 21 which extends in an up-and-down direction and has a predetermined length, and the photodetection sensor 21 detects the laser beam and produces a detecting signal. The photodetection sensor 21 has a photodetection reference position (for instance, the center of the up-and-down direction of the photodetection sensor 21 or a lower end of the photodetection sensor 21), and the photodetection reference position is a known position in the high-low measuring device 2. For instance, a distance between the photodetection reference position and the lower end of the pole 14 is known.

The detecting signal includes a photodetecting signal and a detecting position information. As the detecting position information, a deviation with respect to the photodetection reference position and the like are included. Therefore, based on the detecting signal, a height of the photodetection reference position with respect to the horizontal reference plane O is able to be measured. The detecting signal is input to the arithmetic control module 19.

The distance measurement sensor 16 is directed downward and measures a distance to the ground surface, and various kinds of distance measurement sensors 16 can be adopted. As an example, a distance measurement camera 22 is used as the distance measurement sensor 16. The distance measurement camera 22 has an image pickup element consisting of many pixels, emits a distance measuring light for each pixel, receives a reflected light for each pixel, performs the distance measurement based on TOF (Time Of Flight) for each pixel, and planarly acquires the distance measurement data like an image. Alternatively, the distance measuring light may be scanned with a high-speed and the measurement may be planarly performed. The distance measurement data is input to the arithmetic control module 19.

The distance measurement camera 22 has a measurement reference position, and a distance measured by the distance measurement camera 22 is a distance from the measurement reference position. A distance between the measurement reference position and the lower end of the pole 14 is also known. Further, a relationship between the measurement reference position of the distance measurement camera 22 and a photodetection reference position of the photodetection sensor 21 is known, and a vertical distance between the measurement reference position and the photodetection reference position is also known.

Therefore, by measuring a height of the horizontal reference plane O by the photodetection sensor 21, a height of the measurement reference position is acquired with respect to the horizontal reference plane O.

A relationship between the measurement reference position and a reference point of a projection optical system of the projector 17 is known, and an optical axis of the distance measurement camera 22 and an optical axis of the projector 17 are parallel or substantially parallel, and a distance between both the optical axes is also known.

The second tilt sensor 18 detects a tilt of the distance measurement camera 22 with respect to the horizontality or a tilt of the optical axis of the distance measurement camera 22 with respect to the verticality. Alternatively, a tilt of the pole 14 with respect to the verticality is detected. A tilt detection result of the second tilt sensor 18 is input to the arithmetic control module 19.

The optical axis of the distance measurement camera 22 is set parallel to the pole 14. It is to be noted that, when the second tilt sensor 18 is configured to detect a tilt of the pole 14 with respect to the verticality, the optical axis of the distance measurement camera 22 tilts with respect to the pole 14 at a known angle.

The second tilt sensor 18 may be incorporated in the arithmetic control module 19. Further, as the second tilt sensor 18, various kinds of IMU sensors such as an acceleration sensor or a gyroscope sensor can be used.

The arithmetic control module 19 includes an arithmetic processing module 24 and a storage module 25. As the arithmetic processing module 24, a CPU specialized to the present embodiment, a general-purpose CPU, an embedded CPU, a microprocessor, or the like is used. Further, as the storage module 25, a semiconductor memory such as a RAM, a ROM, or a Flash ROM, or a DRAM, or a magnetic recording memory such as an HDD is used.

The arithmetic processing module 24 develops various kinds of programs stored in the storage module 25, and performs necessary processing and operations.

In the storage module 25, various kinds of programs are stored to carry out the present embodiment. The programs include, for instance, a control program for integrally controlling the synchronization of the distance measurement camera 22 and the projector 17 or the like, a distance measurement program for making the distance measurement camera 22 to perform the image pickup and the distance measurement, an arithmetic program for calculating the three-dimensional data based on the distance measurement data, a program for calculating a video signal based on the three-dimensional data, and the like.

Further, in the storage module 25, a threshold value for determining a high-low state is stored, or a measurement result, the image data, and the like are stored. In the following description, the high-low state includes a state of a deviation with respect to a set height of an object surface to be measured, a state of irregularities (unevenness) with respect to a set plane, and a state of a tilt with respect to a horizontal plane. Further, the high-low information includes an information of a deviation with respect to a set height of an object surface, an information of unevenness with respect to a set plane, and an information of a state of a tilt with respect to a horizontal plane.

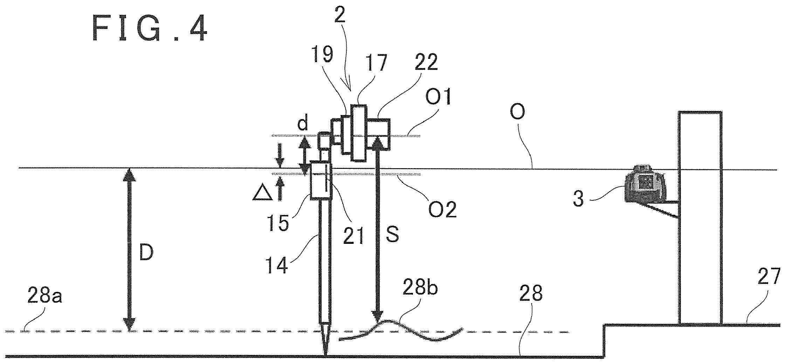

A description will be given by referring to FIG.4 on a case where an unevenness state is measured.

In FIG.4, a reference numeral 27 denotes a floor surface serving as a reference, and the laser level planer 3 is installed at a known height with respect to the floor surface 27 and forms a horizontal reference plane O of a known height with respect to the floor surface 27.

Assuming that concrete is placed on a construction floor surface 28 which is lowered from the floor surface 27 by a predetermined amount and a construction finished surface is 28a.

For instance, a measurer butts the pole 14 on the construction floor surface 28 and supports the high-low measuring device 2 vertically or substantially vertically. A vertical state of the high-low measuring device 2 is detected by the second tilt sensor 18.

The following description assumes that the high-low measuring device 2 is vertically supported.

In the drawing, a reference sign O1 denotes a horizontal line running through a measurement reference position of the distance measurement camera 22, and a reference sign 02 denotes a horizontal line running through a photodetection reference position of the photodetection sensor 21. The construction finished surface 28a is set to a height difference D with respect to the horizontal reference plane O such that a predetermined placing thickness can be obtained.

As described above, the measurement reference position and the photodetection reference position have the known relationship, and a distance between O1 and O2 has the known value d. Further, a deviation $\Delta$ between a laser beam receiving position of the photodetection sensor 21 and the photodetection reference position (that is, a deviation $\Delta$ between the horizontal reference plane O and the photodetection reference position) is provided, and a distance measurement value S (that is, a distance between the measurement reference position of the distance measurement camera 22 and a construction surface 28b) of the construction surface (a concrete placing surface) 28b as measured by the distance measurement camera 22 is provided.

The unevenness $\Delta F$ of the construction surface 28b with reference to the construction finished surface 28a is acquired by the following expression.

$$\Delta F = D + (d - \Delta) - S \quad \ldots \quad (Expression\ 1)$$

Here, $\Delta$ is + above the photodetection reference position and - below the same. Further, as to the unevenness $\Delta F$, a positive value indicates a state which is convex compared with the construction finished surface 28a and a negative value indicates a state which is concave compared to the same.

The height difference D and the distance d between the measurement reference position and the photodetection reference position are set in the arithmetic control module 19 in advance, and a distance measurement result of the distance measurement camera 22 and a detecting signal of the photodetection sensor 21 are input to the arithmetic control module 19, respectively. The arithmetic control module 19 calculates the unevenness $\Delta F$ based on the height difference D, the distance d, the distance measurement result, and the detecting signal.

Further, the distance measurement camera 22 is capable of performing the distance measurement in units of pixel of the image pickup element. The arithmetic control module 19 calculates the unevenness $\Delta F$ in units of pixel and thereby acquires an unevenness $\Delta F$ distribution of an entire angle of field of the distance measurement camera 22.

Further, the arithmetic control module 19 classifies the unevenness $\Delta F$ with the use of a threshold value set in the storage module 25, and can create an unevenness map 4.

For instance, in a case where the unevenness $\Delta F$ is + with respect to the construction finished surface 28a, a warm color group is used, and the color density or the color tone is made darker for each 3 mm increase, for instance. Further, in a case where the unevenness $\Delta F$ is - with respect to the construction finished surface 28a, a cool color group is used, and the color density or the color tone is made darker for each 3 mm decrease, for instance. In the unevenness map 4 shown in FIG.1, the unevenness state is indicated by the shading.

It is to be noted that the threshold value for classifying can be appropriately set to 5 mm or 1 cm, for instance, without being restricted to 3 mm. Further, the classifying may be indicated in one color and the shading only.

The arithmetic control module 19 inputs the created unevenness map to the projector 17 as a video signal, and the unevenness map 4 is projected onto the construction surface 28b by the projector 17. A position and a range of the unevenness map 4 to be projected coincide with a position and a distance measurement range as measured by the distance measurement camera 22, and the unevenness information of the construction surface 28b is accurately displayed by the unevenness map 4. Further, a worker can visually confirm the unevenness state of the construction surface 28b from the projected unevenness map 4. The projection of the unevenness map 4 may be continuous or may be blinked.

In a case where the unevenness map is projected onto the construction surface 28b in the state while placing concrete, the worker can confirm in real time the unevenness state when the concrete is placed, and the unevenness state can be corrected in real time. Therefore, the concrete placing work can be performed while correcting the unevenness state.

Further, in a case where the unevenness map is projected onto the construction surface 28b, which has already been concrete-placed, a finish state and a finish accuracy of the construction surface 28b can be confirmed.

In the above explanation, it is assumed that the high-low measuring device 2 is supported vertically, but in reality, it can be considered that the high-low measuring device 2 tilts or shakes. The high-low measuring device 2 includes a second tilt sensor 18, which detects a tilt of the high-low measuring device 2 (the pole 14 or an optical axis of the distance measurement camera 22) in real time, and a tilt detection result is input to the arithmetic control module 19 in real time.

The arithmetic control module 19 corrects measurement results (a measured distance, a measured position) of the distance measurement camera 22 in real time based on a distance from the lower end of the pole 14 to the measurement reference position and the tilt detection result. Therefore, even if the high-low measuring device 2 has tilted or shaken, the corrected unevenness map is projected, and the measurer can confirm the accurate high-low information.

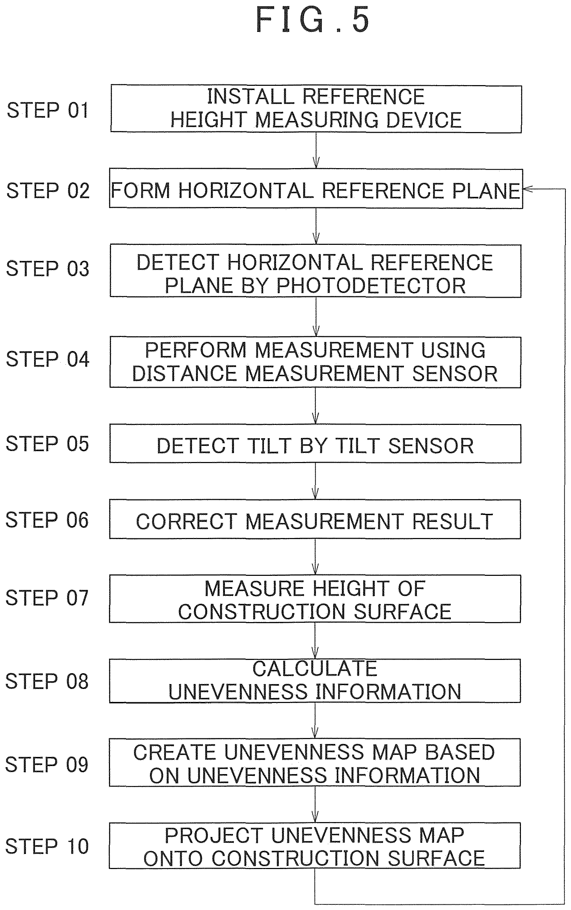

Next, a description will be given on the unevenness measuring work by referring to FIG.5.

(Step 01) The height measuring device 1 (the laser level planer 3 in the present embodiment) is installed at a predetermined position. After leveling, a height of a projected laser beam from a reference position (a position of the floor surface 27 in the present embodiment) is made known by actually measuring, for instance.

(Step 02) The laser beam is rotatably irradiated, and the horizontal reference plane O is formed.

(Step 03) The horizontal reference plane O is detected by the photodetector 15. A height of the measurement reference position of the distance measurement sensor 16 (the distance measurement camera 22 in the present embodiment) is acquired with respect to the horizontal reference plane O based on a photodetecting position of the photodetection sensor 21.

(Step 04) A construction surface is measured by the distance measurement sensor 16.

(Step 05) A tilt of the optical axis of the distance measurement sensor 16 is detected by the second tilt sensor 18.

(Step 06) The measurement result of the distance measurement sensor 16 is corrected based on the tilt detection result.

(Step 07) A height of the construction surface 28b with respect to the horizontal reference plane O is obtained based on the measurement result as corrected (hereinafter, a corrected measurement result) and the height of the measurement reference position with respect to the horizontal reference plane O.

(Step 08) A difference in height between the construction finished surface 28a as set in advance and the construction surface 28b is calculated, and the high-low information is acquired.

(Step 09) An unevenness map image is created based on the high-low information and threshold values as set in advance.

(Step 10) Based on a positional relationship between the distance measurement sensor 16 and the projector 17, and on the corrected distance measurement result, a distance between the projector 17 and a projection plane (the construction surface 28b) is calculated, and the unevenness map image is projected.

In case of changing a measuring position and continuing the measurement, Step 02 to Step 10 are repeatedly performed.

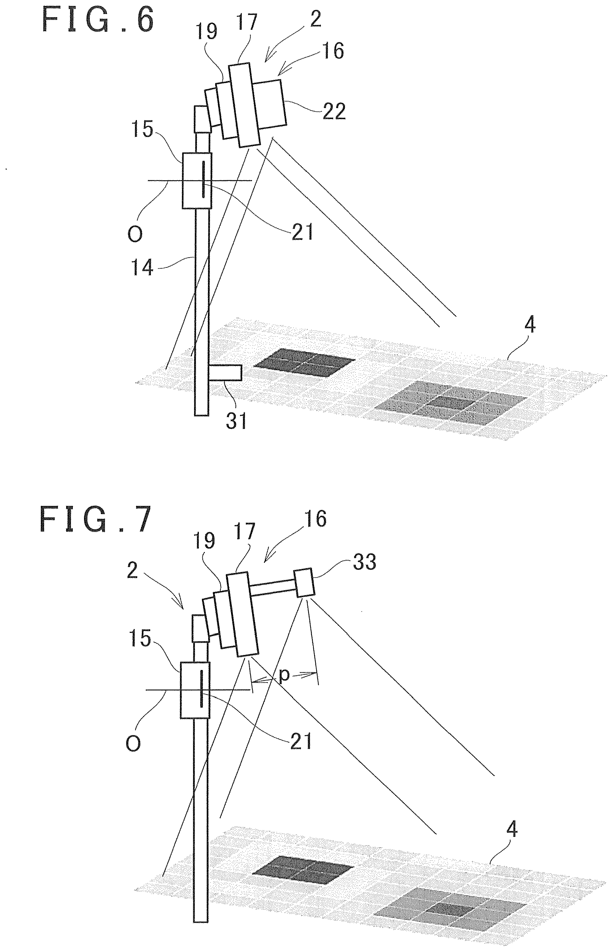

FIG.6 shows a modification of the first embodiment.

In FIG.6, what are equivalent to components as shown in FIG.1 are referred by the same symbol, and the detailed description thereof will be omitted.

At a necessary position of a pole 14, a target plate 31 for distance calibration is provided. A distance between the target plate 31 and a reference position of a distance measurement camera 22 is actually measured or made known from a drawing, and the known distance is determined as an actually measured value. In FIG.6, a reference numeral 4 denotes a projected unevenness map.

In case of measuring a floor surface (a construction finished surface 28a, a construction surface 28b) with the distance measurement camera 22, the target plate 31 is measured before the fact, after the fact or simultaneously, a distance measurement result of the target plate 31 as obtained by the distance measurement camera 22 is compared with the actually measured value, and the distance measurement camera 22 is calibrated. Errors possessed by the distance measurement camera 22 are corrected by the calibration, and a measurement accuracy is improved.

FIG.7 shows general features of a surveying system according to a second embodiment, and the surveying system is mainly constituted of a height measuring device 1 and a high-low measuring device 2. It is to be noted that, in FIG.7, a reference numeral 4 denotes a projected unevenness map.

In FIG.7, what are equivalent to components as shown in FIG.1 are referred by the same symbol, and the detailed description thereof will be omitted. It is to be noted that a laser level planer 3 is not shown in FIG.7.

In the second embodiment, a distance measurement sensor 16 is constituted of a projector 17 and a camera 33.

An optical axis of the projector 17 and an optical axis of the camera 33 are parallel, and both the optical axes are separated by a predetermined distance. The separation distance between the respective optical axes is known, and is a distance p by which a sufficient parallax is obtained to measure the floor surface. Therefore, the projector 17 and the camera 33 is a distance measurement sensor 16 which performs the distance measurement using the parallax.

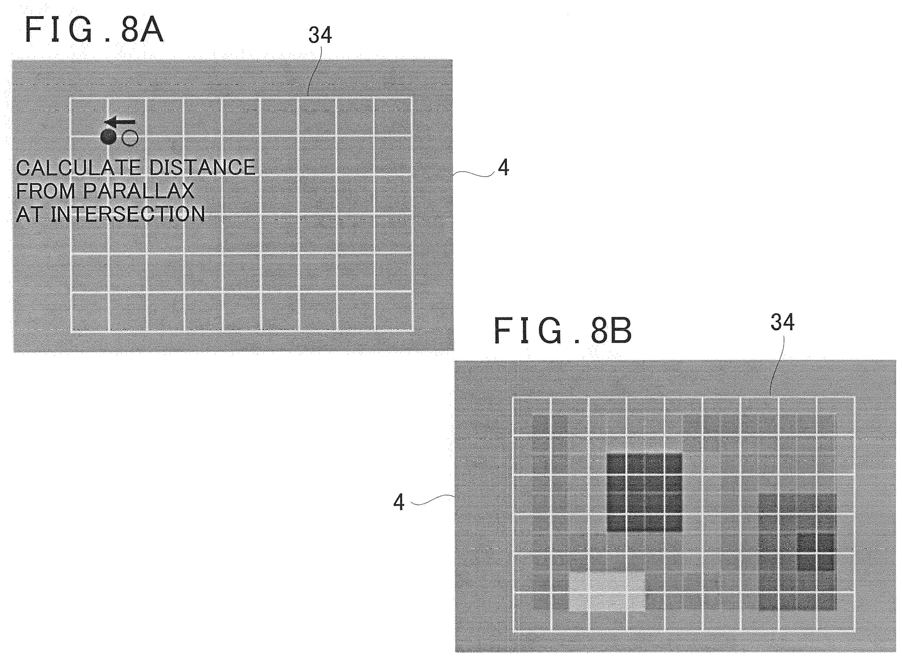

At the time of the distance measurement of the floor surface, the projector 17 projects an image including a pattern 34 for the distance measurement (FIG.8A). It is to be noted that FIG.8A shows a grid-like pattern, but it is sufficient that the pattern is capable of confirming a displacement due to the parallax, and the pattern may be a dot pattern in which dots are distributed vertically and horizontally at predetermined intervals.

The pattern 34 projected onto the floor surface is picked up by the camera 33.

In an image acquired by the camera 33, an intersection (a black circle) in the pattern 34 is displaced to a position of a white circle. Since this displacement amount corresponds to a size of the unevenness, when obtaining a displacement amount of each intersection in the entire pattern 34, it is possible to measure an unevenness state based on the displacement amounts.

Based on this unevenness state, like the above-described embodiment, an unevenness map 4 can be created. This unevenness map 4 may be projected on the pattern 34 so as to be superimposed (see FIG.8B), or the unevenness map 4 alone may be projected.

Further, as a modification of the second embodiment, the distance measurement sensor 16 may be constituted of two cameras (a parallax camera) with a predetermined parallax.

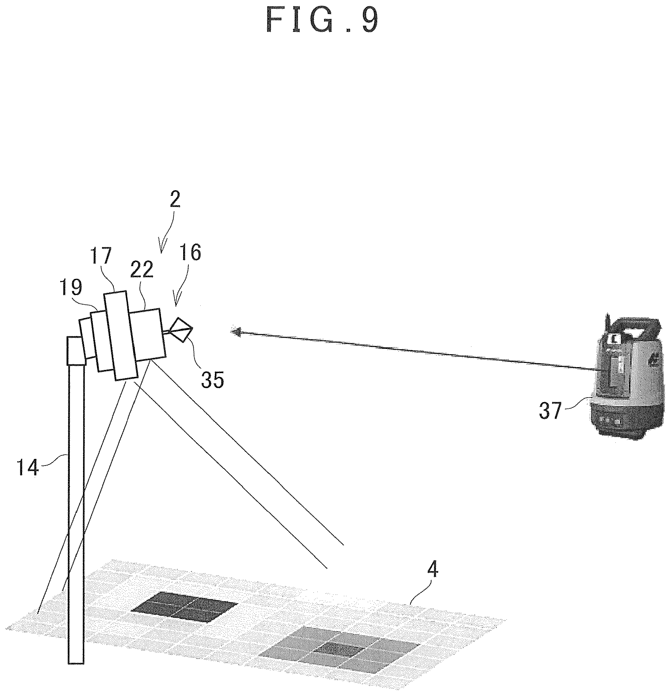

A description will be given on a third embodiment by referring to FIG.9 to FIG.12.

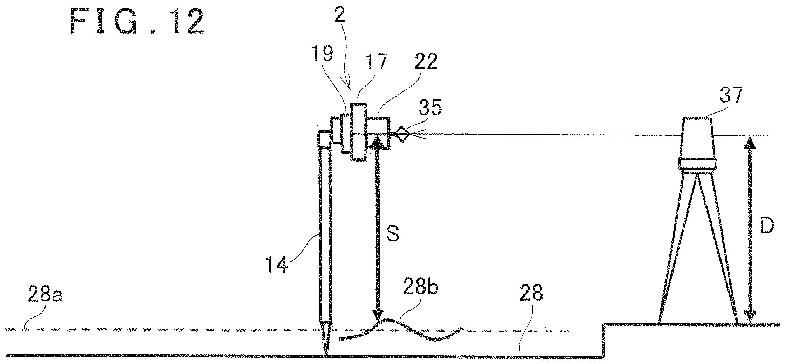

FIG.9 and FIG.12 show general features of a surveying system according to the third embodiment, and the surveying system is mainly constituted of a height measuring device 1 and a high-low measuring device 2 similarly to the first embodiment.

In the third embodiment, an electro-optical distance device with a tracking function, for instance, a total station 37 is used as the height measuring device 1. It is to be noted that, as other measuring devices with the tracking function, there are measuring devices with a tracking function, for instance, the tracking based on images using an image sensor, the shape tracking using a laser scanner, or the like.

It is to be noted that, in FIG.9, what are equivalent to components as shown in FIG.1 are referred by same symbol, and the detailed description thereof will be omitted.

The total station 37 is horizontally leveled and installed at a necessary position. The total station 37 is installed at a known height. That is, the total station 37 has a survey reference point and is installed so that three-dimensional coordinates of the survey reference point, or at least height coordinates (a height position) are known. For instance, by referring to FIG.12, assuming that the total station 37 is installed on the floor surface 27 and the floor surface 27 has a survey reference height, a height D from the floor surface 27 to the survey reference point is known.

A high-low measuring device 2 has a prism 35 with retroreflective characteristics as an object to be measured for the height measurement. An optical center of the prism 35 and a measurement reference position of the distance measurement camera 22 have a known relationship. It is to be noted that a reflective sheet may be used as the object.

The total station 37 includes a telescope module (not shown) which sights the prism 35 as the object, projects a tracking light via the telescope module, and tracks the prism 35. Further, the total station 37 projects a distance measuring light via the telescope module, receives a reflected light from the prism 35, and performs the electro-optical distance measurement with respect to the prism 35.

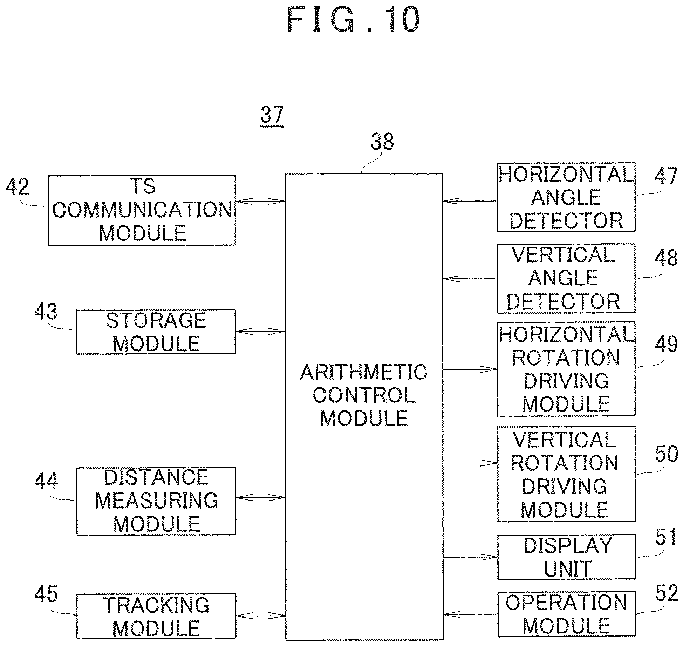

By referring to FIG.10, a description will be given on an approximate arrangement of the total station 37.

The total station 37 mainly includes an arithmetic control module 38, a TS communication module 42, a storage module 43, a distance measuring module 44, a tracking module 45, a horizontal angle detector 47, a vertical angle detector 48, a horizontal rotation driving module 49, a vertical rotation driving module 50, a display unit 51, and an operation module 52.

The arithmetic control module 38 performs individually controlling the TS communication module 42, the distance measuring module 44, the tracking module 45, the horizontal rotation driving module 49, the vertical rotation driving module 50 and the display unit 51 such as driving control and synchronous control and integrally controlling these modules.

The TS communication module 42 performs the data communication with the high-low measuring device 2, and the tracking module 45 projects a tracking light, receives a reflected light from the prism 35, and carries out the tracking. Further, in parallel with the tracking by the tracking module 45, the distance measuring module 44 projects a distance measuring light and receives the reflected light from the prism 35, and performs the distance measurement with the prism 35 as an object.

Further, the horizontal angle detector 47 has a reference point, and is configured to detect a horizontal angle of an optical axis of a telescope with respect to this reference point. Further, the vertical angle detector 48 is configured to detect a high-low angle with respect to the horizontality.

The horizontal rotation driving module 49 and the vertical rotation driving module 50 horizontally rotate and vertically rotate the telescope so that the prism 35 is tracked. The horizontal angle detector 47 and the vertical angle detector 48 detect a horizontal angle and a vertical angle in the distance measurement. Therefore, an object is subjected to the distance measurement, and three-dimensional coordinates of the object are determined.

The TS communication module 42 transmits the determined three-dimensional coordinates to the high-low measuring device 2 in real time.

The ON/OFF of operations, settings of operation conditions of the total station 37, and the like are input from the operation module 52, and an operation state and the like of the total station 37 are displayed in the display unit 12.

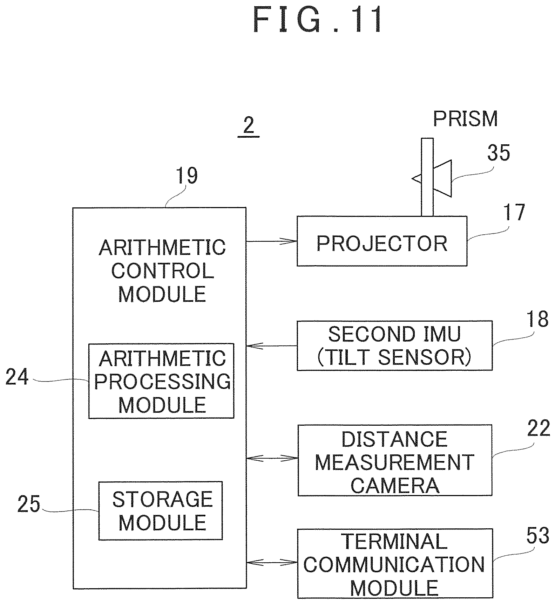

FIG.11 shows general features of the high-low measuring device 2 of the third embodiment, the high-low measuring device 2 in the third embodiment and the high-low measuring device 2 in the first embodiment have substantially the same structure, the prism 35 is provided in place of the photodetector 15, and the high-low measuring device 2 includes a terminal communication module 53 for the data communication with the total station 37.

In FIG.11, a distance measurement camera 22 is shown as the distance measurement sensor 16, but the distance measurement sensor 16 may be constituted of the projector 17 and the camera 33, or a parallax camera as illustrated in the second embodiment.

A description will be given on the unevenness measurement in the third embodiment by referring to FIG.12. It is to be noted that, in FIG.12, what are equivalent to components as shown in FIG.4 are referred by the same symbol, and the detailed description thereof will be omitted.

The prism 35 is measured by the total station 37, and the total station 37 transmits three-dimensional coordinates of the prism 35 as the measurement data from the TS communication module 42 to the terminal communication module 53 of the high-low measuring device 2. The terminal communication module 53 inputs the received three-dimensional data to the arithmetic control module 19.

The three-dimensional data is further input to the arithmetic processing module 24, and the arithmetic processing module 24 acquires a height of the prism 35 from the three-dimensional data, that is, a height of an irradiation position of the distance measuring light of the total station 37.

The acquired height of the irradiation position of the distance measuring light is a height of the prism 35 (a height of the optical center of the prism 35) with reference to the floor surface 27 (see FIG.4).

Further, the arithmetic processing module 24 is capable of acquiring a height of the distance measurement camera 22 with reference to the floor surface 27 from a known relationship between the optical center of the prism 35 and the measurement reference position of the distance measurement camera 22 and from the height of the prism 35.

Thus, an unevenness state of the construction surface 28b can be measured from the measurement result of the distance measurement camera 22.

The creation of the unevenness map 4 and the projection of an unevenness map image onto the construction surface 28b are the same as the first embodiment, and hence a description thereof will be omitted.

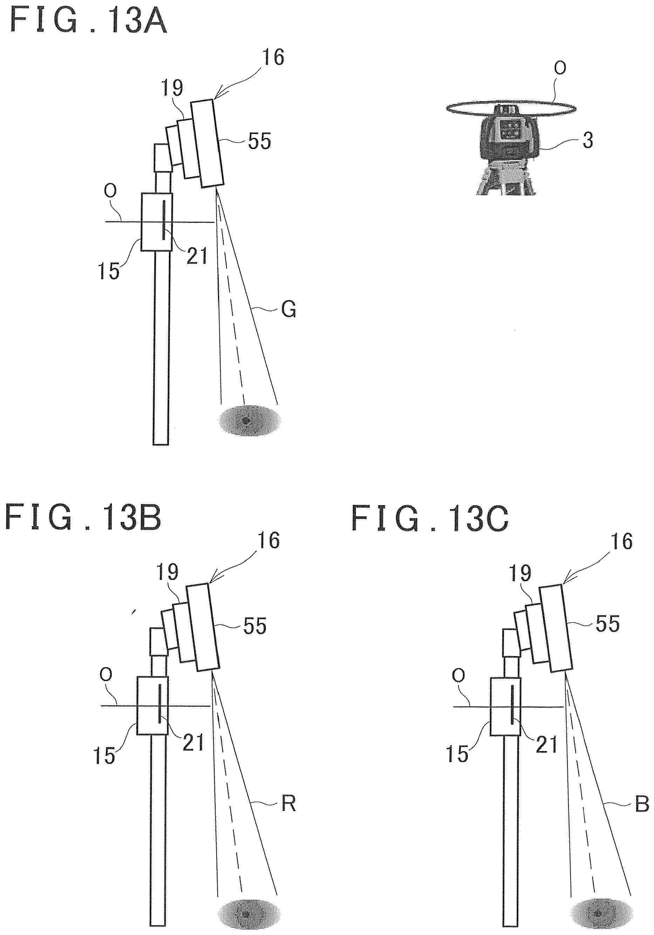

A description will be given on a fourth embodiment by referring to FIG.13A, FIG.13B and FIG.13C.

In the fourth embodiment, a distance measurement sensor 16 is constituted of a laser length measuring device which projects a single beam (not shown) and an LED illuminator 55. An optical axis of the laser length measuring device is parallel or substantially parallel to that of the LED illuminator 55, and a distance between the optical axes is known. Illumination lights projected from the LED illuminator 55 are set as visible lights with different wavelengths (different colors). For instance, colors of the illumination lights as emitted from the LED illuminator are set to red, blue, and green.

It is to be noted that several LED illuminators 55 of different colors may be provided with their optical axes aligned, alternatively, one LED illuminator 55 may be used, which is capable of projecting the illumination lights of a plurality of colors and of changing over colors of the illumination lights and then irradiating the illumination lights. Further, in order to facilitate the visibility, the illumination light may have the necessary spread. For instance, a diameter may become 5 cm on an irradiated surface. It is to be noted that the spread of the illumination light may be appropriately changeable in correspondence with a work state, and the diameter is not limited to 5 cm.

The LED illuminator 55 has a function as a projector, and the projector 17 is omitted in the fourth embodiment.

The fourth embodiment illustrates a case where a laser level planer 3 is used as a height measuring device 1, but it is needless to say that the embodiment is possible even if a total station 37 is used.

A photodetection sensor 21 of a photodetector 15 detects a horizontal reference plane O, and thereby, it is possible to acquire a height of a measurement reference position of the laser length measuring device, and an unevenness amount of a construction surface 28b (see FIG.4) can be measured from a measurement result of the laser length measuring device.

An arithmetic control module 19 changes a color of illumination light from the LED illuminator 55 in correspondence with the unevenness amount and selects a color of the illumination light. By changing the color of the illumination light as irradiated on the construction surface 28b in correspondence with the unevenness amount, it is possible to visually confirm an unevenness state of a measuring position.

For instance, a green illumination light G is irradiated (FIG.13A) in case of an appropriate range (for instance, ±3 mm with respect to a construction finished surface 28a (see FIG.4)), a red illumination light R is irradiated (FIG.13B) in case of a convexity beyond the appropriate range, and a blue illumination light B (FIG.13C) is irradiated in case of a concavity beyond the appropriate range.

It is to be noted that, with respect to the color of the illumination light to be irradiated, by mixing the illumination lights, a change of the color is obtained. Therefore, when the arithmetic control module 19 controls the mixing of the illumination lights in correspondence with an unevenness amount, the finer unevenness state can be projected.

In a case where a total station 37 is used as the height measuring device 1 and a high-low measuring device 2 is tracked and measured by the total station 37, the high-low measuring device 2 can be a handheld type without being installed on a construction floor surface 28.

A height of the high-low measuring device 2 (that is, a height of a prism 35) is measured in real time by the total station 37, and a tilt of the high-low measuring device 2 (a tilt of the distance measurement sensor 16) is detected in real time by a second tilt sensor 18. Further, by correcting the measured height of the high-low measuring device 2 with the detected tilt, an accurate height of the distance measurement sensor 16 is obtained. Therefore, an accurate unevenness amount is determined from a measured value of the distance measurement sensor 16.

It is to be noted that, needless to say, with respect to the unevenness map to be projected, the unevenness map as corrected in real time is projected.

Then, in a case where the high-low measuring device 2 is a handheld type and the distance measurement sensor 16 includes the LED illuminator 55 as illustrated in the fourth embodiment, when the illumination light is irradiated while swinging the high-low measuring device 2 within a necessary range, the color of the illumination light changes in correspondence with the unevenness state. Therefore, by swinging the high-low measuring device 2 at a visible speed and within a visible range, it is possible to recognize the irradiation by the illumination light as the unevenness map.

Further, the high-low measuring device has casters for moving or is mounted on a moving vehicle, and thereby the high-low measuring device is capable of irradiating while being moved by remote controlling or a program. Although the case of measuring the unevenness on the object surface or the construction surface has been described above, it is needless to say that by measuring a deviation with respect to the object surface or to a set height of the construction surface (a construction finished surface), or by measuring a plurality of points on the construction surface, a tilt with respect to the horizontality can be measured.

## Claims

1. A surveying system comprising: a height measuring device (1) and a high-low measuring device (2) for measuring a high-low information of a construction surface,

   wherein said high-low measuring device comprises an object (15, 35) measured by said height measuring device, a distance measurement sensor (16) which is provided in a known relationship with said object and measures a distance to said construction surface,
   a projecting device (17) which has an optical axis parallel or substantially parallel to an optical axis of said distance measurement sensor wherein the distance between both the optical axes is known and projects said high-low information, and an arithmetic control module (19),
   wherein said high-low information includes an information of a deviation with respect to a set height of said construction surface, an information of unevenness with respect to a set plane, and an information of a state of a tilt with respect to a horizontal plane,
   wherein said arithmetic control module is configured to calculate said high-low information of said construction surface based on a height information of said object measured by said height measuring device, the distance to said construction surface measured by said distance measurement sensor and the known relationship between said object and said distance measurement sensor, and wherein said projecting device is configured to project said high-low information onto said construction surface.

2. The surveying system according to claim 1, wherein said height measuring device (1) is adapted to form a horizontal reference plane with a known height, said object is a photodetector (15) for detecting said horizontal reference plane, and said arithmetic control module (19) is configured to calculate a height of a measurement reference position of said distance measurement sensor (16) with respect to said horizontal reference plane based on a detection result of said photodetector and to calculate the high-low information of said construction surface based on a measurement result of said distance measurement sensor.

3. The surveying system according to claim 1, wherein said height measuring device (1) is a surveying instrument (37) which is provided at a known height, has a TS communication module (42) configured to transmit measurement results and has a tracking function, said high-low measuring device (2) has a terminal communication module (53) configured to receive measurement results from said TS communication module, said object is a prism (35), and said arithmetic control module (19) is configured to acquire the height information of said prism via said terminal communication module, to calculate a height of said measurement reference position of said distance measurement sensor (16) based on said height information of said prism, and to calculate the high-low information of said construction surface based on a measurement result of said distance measurement sensor.

4. The surveying system according to any one of claims 1 to 3, wherein said high-low measuring device (2) further comprises a tilt sensor (18), and said arithmetic control module (19) is configured to correct said high-low information based on a detection result of said tilt sensor.

5. The surveying system according to claim 3, wherein said high-low measuring device (2) further comprises a tilt sensor (18) and is constituted as a handheld type, and said arithmetic control module (19) is configured to correct said high-low information based on a detection result of said tilt sensor.

6. The surveying system according to any one of claims 1 to 5, wherein said distance measurement sensor (16) is a distance measurement camera (22) which has an image pickup element consisting of many pixels, emits a distance measuring light for each pixel, receives a reflected light for each pixel and performs the distance measurement based on TOF (Time Of Flight) for each pixel.

7. The surveying system according to any one of claims 1 to 5, wherein said distance measurement sensor (16) is a parallax camera constituted of two cameras with a predetermined parallax.

8. The surveying system according to any one of claims 1 to 5, wherein said distance measurement sensor (16) is constituted of a projector (17) for projecting a pattern for measuring distance and a camera (33) provided to produce a parallax with respect to said projector.

9. The surveying system according to any one of claims 1 to 5, wherein said distance measurement sensor (16) is a laser length measuring device, and said distance measurement sensor irradiates laser beams of a plurality of different colors, and said arithmetic control module (19) is configured to select a color of a laser beam in correspondence with the high-low information.

**Patentansprüche**

1. Vermessungssystem umfassend: eine Höhenmessvorrichtung (1) und eine Hoch-Tief-Messvorrichtung (2) zum Messen einer Hoch-Tief-Information einer Baufläche,

wobei die Hoch-Tief-Messvorrichtung ein Objekt (15, 35) umfasst, das von der Höhenmessvorrichtung gemessen wird, einen Abstandsmesssensor (16), der in einer bekannten Beziehung zu dem Objekt vorgesehen ist und einen Abstand zu der Baufläche misst,
eine Projektionsvorrichtung (17), die eine optische Achse parallel oder im Wesentlichen parallel zu einer optischen Achse des Abstandsmesssensors aufweist, wobei der Abstand zwischen den beiden optischen Achsen bekannt ist, und die die Hoch-Tief-Information projiziert,
und ein arithmetisches Steuermodul (19),
wobei die Hoch-Tief-Information eine Information über eine Abweichung in Bezug auf eine festgesetzte Höhe der Baufläche, eine Information über eine Unebenheit in Bezug auf eine festgesetzte Ebene und eine Information über einen Neigungszustand in Bezug auf eine horizontale Ebene enthält, wobei das arithmetische Steuermodul so konfiguriert ist, die Hoch-Tief-Information der Baufläche auf der Grundlage einer Höheninformation des Objekts, die von der Höhenmessvorrichtung gemessen wird, des Abstands zu der Baufläche, der von dem Abstandsmesssensor gemessen wird, und der bekannten Beziehung zwischen dem Objekt und dem Abstandsmesssensor zu berechnen, und wobei die Projektionsvorrichtung so konfiguriert ist, die Hoch-Tief-Information auf die Baufläche zu projizieren.

**2.** Vermessungssystem nach Anspruch 1, wobei die Höhenmessvorrichtung (1) so ausgebildet ist, eine horizontale Referenzebene mit einer bekannten Höhe zu bilden, das Objekt ein Photodetektor (15) zum Detektieren der horizontalen Referenzebene ist und das arithmetische Steuermodul (19) so konfiguriert ist, eine Höhe einer Messreferenzposition des Abstandsmesssensors (16) in Bezug auf die horizontale Referenzebene auf der Grundlage eines Detektionsergebnisses des Photodetektors zu berechnen und die Hoch-Tief-Information der Baufläche auf der Grundlage eines Messergebnisses des Abstandsmesssensors zu berechnen.

**3.** Vermessungssystem nach Anspruch 1, wobei die Höhenmessvorrichtung (1) ein Vermessungsinstrument (37) ist, das auf einer bekannten Höhe vorgesehen ist, ein TS-Kommunikationsmodul (42) aufweist, das so konfiguriert ist, Messergebnisse zu übertragen, und eine Tracking-Funktion aufweist, die Hoch-Tief-Messvorrichtung (2) ein Terminal-Kommunikationsmodul (53) aufweist, das so konfiguriert ist, Messergebnisse von dem TS-Kommunikationsmodul zu empfangen, das Objekt ein Prisma (35) ist, und das arithmetische Steuermodul (19) so konfiguriert ist, die Höheninformation des Prismas über das Terminal-Kommunikationsmodul zu erfassen, eine Höhe der Messreferenzposition des Abstandsmesssensors (16) basierend auf der Höheninformation des Prismas zu berechnen und die Hoch-Tief-Information der Baufläche basierend auf einem Messergebnis des Abstandsmesssensors zu berechnen.

**4.** Vermessungssystem nach einem der Ansprüche 1 bis 3, wobei die Hoch-Tief-Messvorrichtung (2) ferner einen Neigungssensor (18) umfasst und das arithmetische Steuermodul (19) so konfiguriert ist, die Hoch-Tief-Information auf der Grundlage eines Detektionsergebnisses des Neigungssensors zu korrigieren.

**5.** Vermessungssystem nach Anspruch 3, wobei die Hoch-Tief-Messvorrichtung (2) ferner einen Neigungssensor (18) umfasst und als Handheld-Ausführung ausgebildet ist, und das arithmetische Steuermodul (19) so konfiguriert ist, die Hoch-Tief-Information auf der Grundlage eines Detektionsergebnisses des Neigungssensors zu korrigieren.

**6.** Vermessungssystem nach einem der Ansprüche 1 bis 5, wobei der Entfernungsmesssensor (16) eine Entfernungsmesskamera (22) ist, die ein Bildaufnahmeelement aufweist, das aus vielen Pixeln aufgebaut ist, ein Entfernungsmesslicht für jedes Pixel aussendet, ein reflektiertes Licht für jedes Pixel empfängt und die Entfernungsmessung basierend auf TOF (Time Of Flight) für jedes Pixel durchführt.

**7.** Vermessungssystem nach einem der Ansprüche 1 bis 5, wobei der Entfernungsmesssensor (16) eine Parallaxen-Kamera ist, die aus zwei Kameras mit einer vorgegebenen Parallaxe aufgebaut ist.

**8.** Vermessungssystem nach einem der Ansprüche 1 bis 5, wobei der Entfernungsmesssensor (16) aus einem Projektor (17) zur Projektion eines Musters zur Entfernungsmessung und einer Kamera (33) aufgebaut ist, die zur Erzeugung einer Parallaxe in Bezug auf den Projektor vorgesehen ist.

**9.** Vermessungssystem nach einem der Ansprüche 1 bis 5, wobei der Entfernungsmesssensor (16) eine Laserlängenmessvorrichtung ist und der Entfernungsmesssensor Laserstrahlen mehrerer verschiedener Farben aussendet und das arithmetische Steuermodul (19) so konfiguriert ist, eine Farbe eines Laserstrahls in Entsprechung mit der Hoch-Tief-Information auszuwählen.

**Revendications**

**1.** Un système d'arpentage comprenant : un dispositif de mesure de la hauteur (1) et un dispositif de mesure haut-bas (2) pour mesurer une information haut-bas d'une surface de construction,

dans lequel ledit dispositif de mesure haut-bas comprend un objet (15, 35) mesuré par ledit dispositif de mesure de la hauteur,
un capteur de mesure de la distance (16) qui est placé dans une relation connue avec ledit objet et qui mesure une distance par rapport à ladite surface de construction,
un dispositif de projection (17) dont l'axe optique est parallèle ou sensiblement parallèle à l'axe optique dudit capteur de mesure de la distance, la distance entre les deux axes optiques étant connue, et qui projette ladite information haut-bas,
et un module de contrôle arithmétique (19),
dans lequel ladite information haut-bas comprend une information d'un écart par rapport à une hauteur déterminée de ladite surface de construction, une information d'une irrégularité par rapport à un plan déterminé et une information d'un état d'inclinaison par rapport à un plan horizontal,
dans lequel ledit module de commande arithmétique est configuré pour calculer ladite information haut-bas de ladite surface de construction sur la base d'une information de hauteur dudit objet mesurée par ledit dispositif de mesure de la hauteur, de la distance à ladite surface de construction mesurée par ledit capteur de mesure de la distance et de la relation connue entre ledit objet et ledit capteur de mesure de la distance, et dans lequel ledit dispositif de projection est configuré pour projeter ladite information haut-bas sur ladite surface de construction.

2. Le système d'arpentage selon la revendication 1, dans lequel ledit dispositif de mesure de la hauteur (1) est adapté pour former un plan de référence horizontal avec une hauteur connue, ledit objet est un photodétecteur (15) pour détecter ledit plan de référence horizontal, et ledit module de commande arithmétique (19) est configuré pour calculer une hauteur d'une position de référence de mesure dudit capteur de mesure de la distance (16) par rapport audit plan de référence horizontal sur la base d'un résultat de détection dudit photodétecteur et pour calculer l'information haut-bas de ladite surface de construction sur la base d'un résultat de mesure dudit capteur de mesure de la distance.

3. Le système d'arpentage selon la revendication 1, dans lequel ledit dispositif de mesure de la hauteur (1) est un instrument d'arpentage (37) qui est fourni à une hauteur connue, a un module de communication TS (42) configuré pour transmettre des résultats de mesure et a une fonction de suivi, ledit dispositif de mesure haut-bas (2) a un module de communication terminal (53) configuré pour recevoir des résultats de mesure dudit module de communication TS, ledit objet est un prisme (35), et ledit module de contrôle arithmétique (19) est configuré pour acquérir les informations de hauteur dudit prisme via ledit module de communication terminal, pour calculer une hauteur de ladite position de référence de mesure dudit capteur de mesure de distance (16) sur la base desdites informations de hauteur dudit prisme, et pour calculer l'information haut-bas de ladite surface de construction sur la base d'un résultat de mesure dudit capteur de mesure de distance.

4. Système d'arpentage selon l'une des revendications 1 à 3, dans lequel le dispositif de mesure haut-bas (2) comprend en outre un capteur d'inclinaison (18), et ledit module de commande arithmétique (19) est configuré pour corriger ladite information haut-bas sur la base d'un résultat de détection dudit capteur d'inclinaison.

5. Le système d'arpentage selon la revendication 3, dans lequel ledit dispositif de mesure haut-bas (2) comprend en outre un capteur d'inclinaison (18) et est de type portatif, et ledit module de commande arithmétique (19) est configuré pour corriger ladite information haut-bas sur la base d'un résultat de détection dudit capteur d'inclinaison.

6. Le système d'arpentage selon l'une des revendications 1 à 5, dans lequel ledit capteur de mesure de distance (16) est une caméra de mesure de distance (22) qui possède un élément de capture d'image composé de nombreux pixels, émet une lumière de mesure de distance pour chaque pixel, reçoit une lumière réfléchie pour chaque pixel et effectue la mesure de distance sur la base du TOF (Time Of Flight) pour chaque pixel.

7. Le système d'arpentage selon l'une des revendications 1 à 5, dans lequel ledit capteur de mesure de distance (16) est une caméra à parallaxe constituée de deux caméras avec une parallaxe prédéterminée.

8. Système d'arpentage selon l'une des revendications 1 à 5, dans lequel le capteur de mesure de distance (16) est constitué d'un projecteur (17) destiné à projeter un motif pour mesurer la distance et d'une caméra (33) destinée à produire une parallaxe par rapport audit projecteur.

9. Le système d'arpentage selon l'une des revendications 1 à 5, dans lequel ledit capteur de mesure de distance (16) est un dispositif de mesure de longueur par laser, et ledit capteur de mesure de distance irradie des faisceaux laser d'une pluralité de couleurs différentes, et ledit module de commande arithmétique (19) est configuré pour sélectionner une couleur d'un faisceau laser en correspondance avec l'information haut-bas.

# FIG.1

# FIG.2

# FIG.3

<u>2</u>

19

```
┌─────────────────┐        ┌──────────────────┐
│    ARITHMETIC   │───────▶│    PROJECTOR     │── 17
│     CONTROL     │        └──────────────────┘
│     MODULE      │
│                 │        ┌──────────────────┐
│  ┌───────────┐  │        │    SECOND IMU    │── 18
24 │  ARITHMETIC  │◀───────│  (TILT SENSOR)   │
│  │ PROCESSING │  │        └──────────────────┘
│  │   MODULE   │  │
│  └───────────┘  │        ┌──────────────────┐
│                 │        │     DISTANCE     │── 22
│  ┌───────────┐  │◀──────▶│   MEASUREMENT    │
25 │  STORAGE   │  │        │     CAMERA       │
│  │  MODULE   │  │        └──────────────────┘
│  └───────────┘  │
│                 │        ┌──────────────────┐
│                 │◀───────│   PHOTODETECTOR  │── 15
└─────────────────┘        └──────────────────┘
```

FIG.4

EP 4 160 144 B1

# FIG.5

STEP 01 — INSTALL REFERENCE HEIGHT MEASURING DEVICE

STEP 02 — FORM HORIZONTAL REFERENCE PLANE

STEP 03 — DETECT HORIZONTAL REFERENCE PLANE BY PHOTODETECTOR

STEP 04 — PERFORM MEASUREMENT USING DISTANCE MEASUREMENT SENSOR

STEP 05 — DETECT TILT BY TILT SENSOR

STEP 06 — CORRECT MEASUREMENT RESULT

STEP 07 — MEASURE HEIGHT OF CONSTRUCTION SURFACE

STEP 08 — CALCULATE UNEVENNESS INFORMATION

STEP 09 — CREATE UNEVENNESS MAP BASED ON UNEVENNESS INFORMATION

STEP 10 — PROJECT UNEVENNESS MAP ONTO CONSTRUCTION SURFACE

FIG.6

FIG.7

FIG.8A

CALCULATE DISTANCE
FROM PARALLAX
AT INTERSECTION

FIG.8B

EP 4 160 144 B1

# FIG.9

# FIG.10

<u>37</u>

38

| | |
|---|---|
| 42 — TS COMMUNICATION MODULE | HORIZONTAL ANGLE DETECTOR — 47 |
| 43 — STORAGE MODULE | VERTICAL ANGLE DETECTOR — 48 |
| 44 — DISTANCE MEASURING MODULE | ARITHMETIC CONTROL MODULE |
| 45 — TRACKING MODULE | HORIZONTAL ROTATION DRIVING MODULE — 49 |

ARITHMETIC CONTROL MODULE

HORIZONTAL ROTATION DRIVING MODULE — 49

VERTICAL ROTATION DRIVING MODULE — 50

DISPLAY UNIT — 51

OPERATION MODULE — 52

# FIG.11

PRISM

35

2

19

ARITHMETIC
CONTROL
MODULE

PROJECTOR

17

24

ARITHMETIC
PROCESSING
MODULE

SECOND IMU
(TILT SENSOR)

18

25

STORAGE
MODULE

DISTANCE
MEASUREMENT
CAMERA

22

TERMINAL
COMMUNICATION
MODULE

53

FIG.12

EP 4 160 144 B1

FIG.13A

FIG.13B

FIG.13C

**EP 4 160 144 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021214922 A1